Europäisches Patentamt

European Patent Office

Office européen des brevets

(11) Publication number: **0 282 340 B1**

# EUROPEAN PATENT SPECIFICATION

(45) Date of publication of patent specification: **11.11.92** (51) Int. Cl.⁵: **G11B 15/665**, G11B 15/43

(21) Application number: **88302166.9**

(22) Date of filing: **11.03.88**

(54) **Tape loading apparatus.**

(30) Priority: **13.03.87 JP 58213/87**

(43) Date of publication of application:
**14.09.88 Bulletin 88/37**

(45) Publication of the grant of the patent:
**11.11.92 Bulletin 92/46**

(84) Designated Contracting States:
**AT DE FR GB**

(56) References cited:
EP-A- 0 240 437     US-A- 4 398 227
US-A- 4 401 923     US-A- 4 628 375
US-A- 4 636 887     US-A- 4 686 591

(73) Proprietor: **SONY CORPORATION**
**7-35 Kitashinagawa 6-chome Shinagawa-ku**
**Tokyo 141(JP)**

(72) Inventor: **Yoshihiro, Mitsugu**
**c/o SONY CORPORATION 7-35**
**Kitashinagawa 6-chome**
**Shinagawa-ku Tokyo(JP)**

(74) Representative: **Ayers, Martyn Lewis Stanley**
**et al**
**J.A. KEMP & CO. 14 South Square Gray's Inn**
**London, WC1R 5EU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a tape loading apparatus for use with a rotary magnetic head type recording and/or reproducing apparatus such as a video tape recorder.

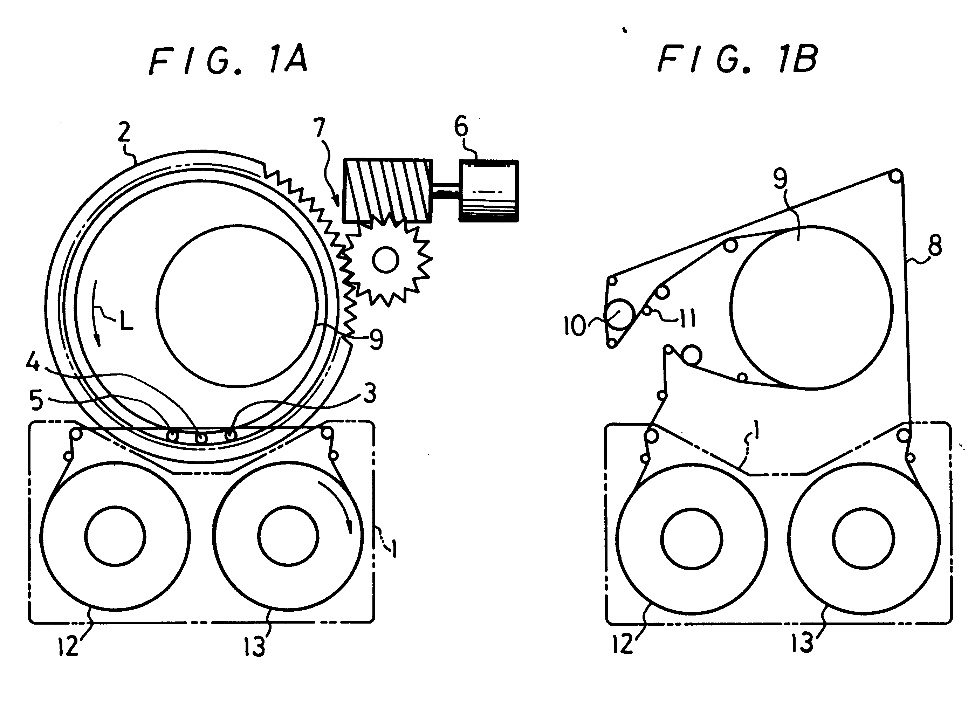

In a video tape recorder (VTR) employing a tape cassette, the tape loading operation in which a tape is withdrawn from a tape cassette and is then wrapped around a rotary head drum is conventionally carried out as shown in figs 1A and 1B of the accompanying drawings.

When a tape cassette 1 is loaded into a VTR (not shown), as shown in fig 1A, loading guides 3, 4 and 5 mounted on a loading ring 2 are brought into the tape withdrawing position. Then, a motor 6 drives a worm gear 7 to rotate the loading ring 2 in the direction shown by arrow L to withdraw the tape 8 from the tape cassette 1. The withdrawn tape 8 is then wrapped around a rotary drum 9 by a predetermined rotational angle, in this case, 180° as shown in fig 1B and the loading operation is complete. In fig 1B, reference numeral 10 designates a pinch roller and 11 a capstan of the tape transport mechanism.

Upon loading, a braking force is applied to the tape supply reel 12 in the tape cassette 1 and a constant torque is applied to the take-up reel 13 in the direction resisting the tape supply. In this state, the loading ring 2 is rotated at a predetermined speed to withdraw the tape 8 from the take-up reel 13. Then, the first to third guides 3 to 5 are sequentially operated to bring the withdrawn tape 8 at the predetermined loading position shown in fig 1B.

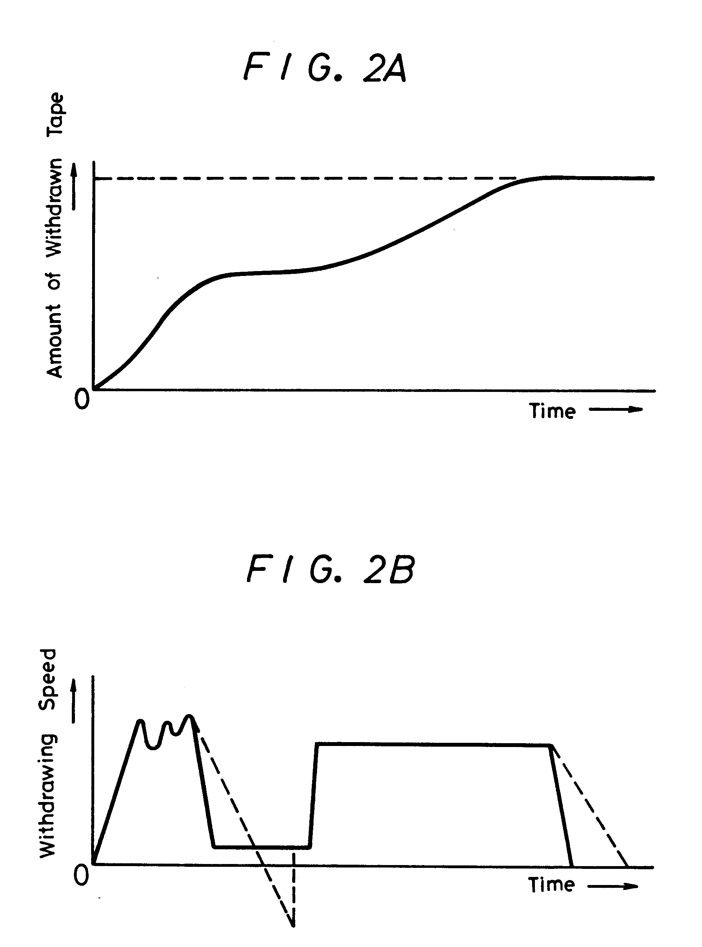

Due to the movement of the loading guides 3, 4 and 5 during the tape loading operation and the sudden stopping of the tape 8 at the completion of the loading operation or the like, the speed of withdrawal of tape from the tape cassette 1 is as shown by the solid line in fig 2B, while the volume of the tape 8 withdrawn from the tape cassette 1 changes as shown by a solid line in fig 2A.

In the prior art, the rotational speed of the loading ring 2 is constant so that the inclination of the change of the tape withdrawing speed is steep.

When the tape cassette 1 is large, the inertia of the take-up reel 13 cannot be neglected. Thus, when the torque applied to the take-up reel 13 is constant, the following problems are encountered.

When the withdrawing speed of the tape 8 is decreased as shown by the solid line in fig 2B, if the change in the rotational speed of the take-up reel 13 determined by the inertia of the take-up reel 13 and the torque applied thereto and the change in the tape withdrawing speed are similar, the tape tension is always constant and hence there is no problem. However, the inertia of the take-up reel 13 increases with the increase of the radius of the volume of the tape 8 wrapped on the take-up reel 13. Since the torque applied to the take-up reel 13 is constant, the rate of change of the rotational speed of the take-up reel 13 changes. When the radius of the volume of the tape 8 wrapped on the take-up reel 13 is large, and hence the inertia of the take-up reel 13 is large, as shown by the broken line in fig 2B, the rotational speed of the take-up reel 13 changes with a gentle inclination relative to the rapid change of the tape withdrawing speed, thus causing the withdrawn tape 8 to be slackened. The amount of slackening of the withdrawn tape 8 increases with the radius of the tape 8 wrapped on the take-up reel 13. In worst cases, the tape 8 may slip off from the loading guide. Further, since the tension is suddenly applied to the slackened tape 8, the tape 8 may be damaged. This risk occurs also when the loading ring 2 is stopped at the completion of the loading operation.

Accordingly, it is an object of the present invention to provide an improved tape loading apparatus which avoids the foregoing problems of the prior art.

According to the present invention, there is provided a magnetic tape cassette recording and/or reproducing device including a cylindrical tape guide drum having at least one rotary head associated therewith for recording and/or reproducing signals on a magnetic tape wrapped around the drum, a cassette holder spaced from said drum for operatively positioning a tape cassette containing supply and take-up reels on which said magnetic tape is wound, and a tape loading apparatus operative in a loading operation to withdraw said magnetic tape from the operatively positioned tape cassette and to wrap the withdrawn tape about said drum: the combination of

a) a supply reel motor and a take-up reel motor for applying torques resisting rotations of said supply reel and take-up reel, respectively, of the operatively positioned tape cassette in directions for unwinding the tape therefrom;

b) loading ring means having guide means positioned thereon for withdrawing the tape when said loading ring means is rotated in a loading operation; and

c) loading ring driving means for rotatably driving said loading ring means; characterised by

d) rotation detecting means for detecting the rotation of said loading ring means and generating a detected signal indicating the rotating position of said loading ring means; and

e) control means for controlling said loading ring driving means according to said detected signal such that the speed at which the tape is withdrawn from the tape cassette can be prevented from changing sharply.

The following detailed description of the illustrative embodiment of the present invention should be taken in conjunction with the accompanying drawings, throughout which like reference numerals identify the same or similar parts. In the drawings:-

Figs 1A and 1B are diagrams used to explain the loading operation of the tape;

Figs 2A and 2B are respectively diagrams used to explain the prior art;

Fig 3 is a block diagram showing an embodiment of a tape loading apparatus according to the present invention; and

Figs 4A and 4B are diagrams used to explain the operation of the present invention.

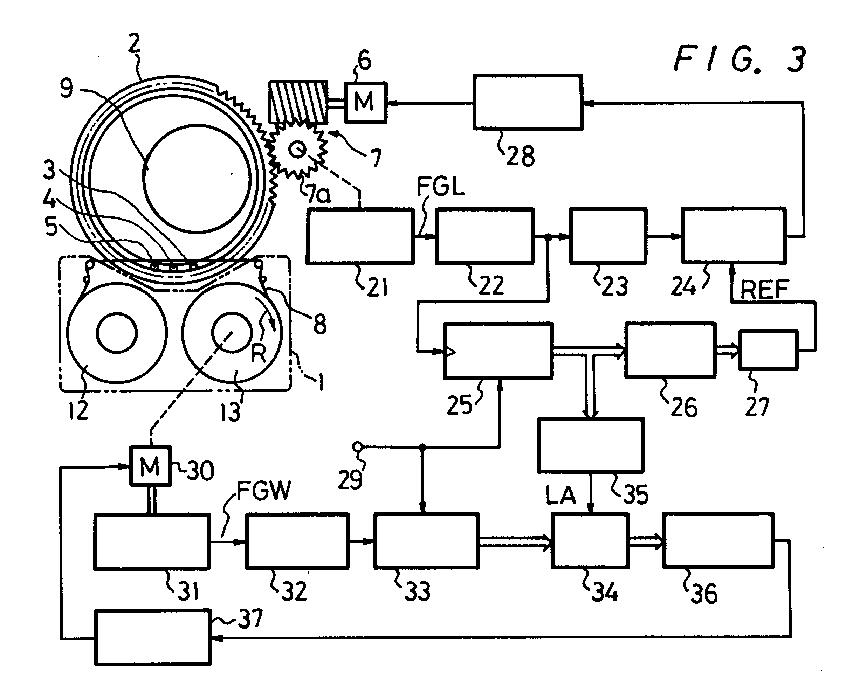

An embodiment of a tape loading apparatus according to the present invention will hereinafter be described with reference to the drawings. Fig 3 is a block diagram showing the embodiment of the present invention. In fig 3, like parts corresponding to those of figs 1A and 1B are marked with the same references and therefore need not be described in detail.

As illustrated in fig 3, in accordance with this embodiment, upon loading, a reel drive motor (not shown) for the supply reel 12 is used to apply to it a braking force to prevent the supply reel 12 from rotating similarly as described above, In this invention, however, the rotational speed of the loading ring 2 is not constant but is controlled to change in response to the loading position. Also, the torque applied to the take-up reel 13 in the direction opposite to the tape withdrawing direction is selected in accordance with the radius of the tape 8 wrapped on the take-up reel 13 to compensate for the effect that that radius has on the inertia of the reel 13. Thus, the tape 8 can be protected from being damaged more effectively.

According to this embodiment, a frequency generator 21 is coaxially provided on a worm wheel 7a of the worm gear 7 which rotates the loading ring 2. Since the rotational speed of the worm wheel 7a is in proportion to the rotational speed of the loading ring 2, the frequency generator 21 generates a frequency signal FGL corresponding to the rotational speed of the loading ring 2.

This frequency signal FGL is supplied through a waveform shaping circuit 22 to a frequency-to-voltage converting circuit 23 which then generates a voltage corresponding to the frequency of the signal FGL. This voltage is supplied to a comparing circuit 24.

The comparing circuit 24 compares this voltage with a reference voltage REF, which will be described later, to produce a difference voltage therebetween. The difference voltage therefrom is supplied to a motor drive circuit 28 which controls the rotational speed of the motor 6. Thus, the loading ring 2 is controlled to rotate at a rotational speed corresponding to the reference voltage REF.

In this case, the rotational speed of the loading ring 2 is controlled by changing the reference voltage REF supplied to the comparing circuit 24 in response to the volume of tape 8 withdrawn from the tape cassette 1, that is, the loading position.

Specifically, the frequency signal FGL through the waveform shaping circuit 22 is supplied to a clock terminal of a counter 25. The counter 25 is reset by a reset signal applied thereto from a terminal 29 before the loading operation begins, and it counts up "0", "1", "2", ... as the loading ring 2 rotates. The count output from the counter 25 is supplied as an address signal to a ROM (read-only memory) 26 which functions as a look-up table.

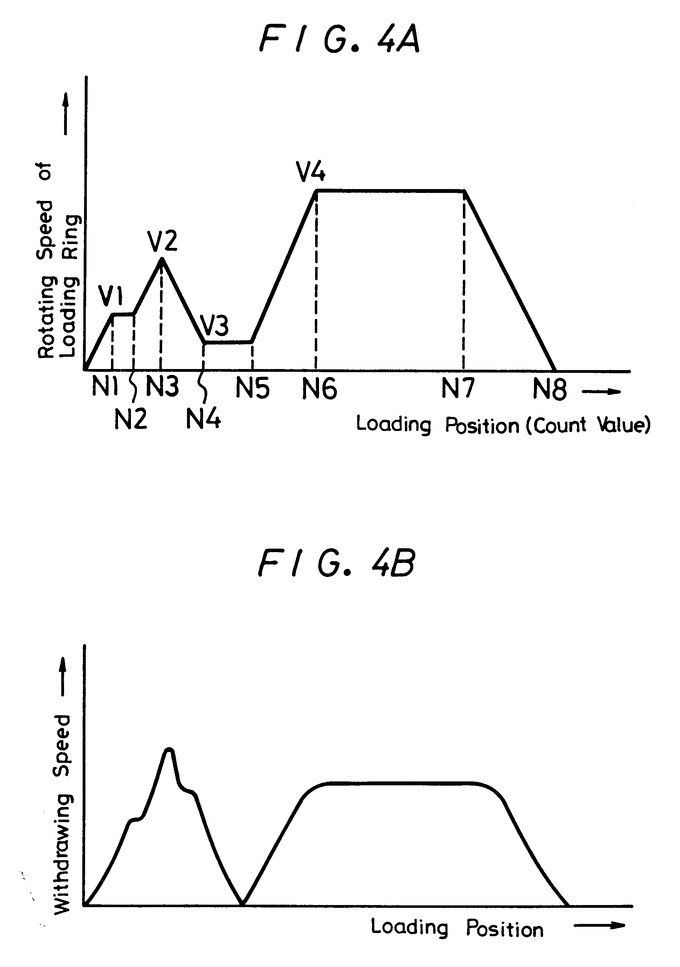

The count value of the counter 25 corresponds to the amount through which the loading ring 2 rotates. This amount corresponds to the loading position. The ROM 26 stores the digital values of the reference voltage REF needed at respective loading positions to change the rotational speed of the loading ring 2 in response to the loading positions as shown in fig 4A. In fig 4A, N1, N2 ... N8 depict and denote count values and, for example, N8 = 500. Thus, the ROM 26 sequentially stores the digital values of the reference voltage REF which changes rectilinearly in response to the position of every pulse or wave of the frequency signal FGL such that the rotational speed of the loading ring 2 is changed rectilinearly up to the loading position of the count value N1 or up to a speed V1 from the beginning of rotation of the loading ring 2.

As the count value of the counter 25 changes with the rotation of the loading ring 2, the digital value of the reference voltage REF, which is sequentially changed, is sequentially read from the ROM 26, converted into a voltage by a D/A (digital to analog) converter 27 and then fed to the comparing circuit 24 as the reference voltage REF.

Therefore, the loading ring 2 rotates with different rotating speeds as shown in fig 4A and the tape 8 is withdrawn from the tape cassette 1 at speeds changing with a gentle inclination as represented by the curve in fig 4B, thus preventing the tape 8 from being damaged.

As earlier noted, according to the present invention, by changing the torque applied to the tape-up reel 13 in accordance with the radius of the tape 8 wrapped on the take-up reel 13, it becomes possible to more effectively protect the tape 8 from being damaged.

To be concrete, as illustrated in fig 3, a drive motor 30 is provided to rotate the take-up reel 13, and a frequency generator 31 is provided to generate a frequency signal FGW corresponding to the revolution speed of the drive motor 30. The frequency generator 31 supplies the frequency signal FGW through a waveform shaping circuit 32 to a clock terminal of a counter 33. Before the loading operation begins, this counter 33 is reset by the reset signal applied from the terminal 29, similarly to the counter 25. Thus, when the loading operation begins and the tape 8 is withdrawn from the take-up reel 13 and the take-up reel 13 is rotated, the frequency generator 31 generates the frequency signal FGW corresponding to the rotating amount of the take-up reel 13 to permit the counter 33 to count up "0", "1", "2", .... Therefore, the count value of the counter 33 is equal to the angle through which the take-up reel 13 has rotated from a starting point of the loading operation.

The count output from the counter 33 is supplied to a latch circuit 34. Meanwhile, the count output from the counter 25 which counts the signal FGL is supplied to a decoder 35. When the counter 25 counts a predetermined value N, the decoder 35 produces a pulse LA. This pulse LA is supplied to the latch circuit 34 as a latch pulse by which the count value of the counter 33 at that time is latched in the latch circuit 34.

In this case, the count value detected by the decoder 35 is made a value when the tape withdrawn amount is changing rectilinearly from the loading starting point. In the illustrated example, as will be clear from the curve in fig 4A, the count value is selected to be smaller than N1. Within this range, the count value of the counter 25 is in proportion to the amount in which the tape 8 is withdrawn from the tape cassette 1. Therefore, the latch circuit 34 latches the number of pulses or waves of the signal FGW corresponding to the angle in which the take-up reel 13 rotates until the tape 8 is withdrawn from the tape cassette 1 by a predetermined length ℓ represented by the count value N. The output from the latch circuit 34 is supplied to a calculating circuit 36. The calculating circuit 36 calculates the radius of the tape 8 wrapped on the take-up reel 13 from the known length ℓ and the rotating angle of the take-up reel 13, ie, the output from the latch circuit 34. The thus obtained output indicating the radius of the tape 8 wrapped on the take-up reel 13 is supplied to a torque applying circuit 37 which applies a torque signal corresponding to the above radius to the drive motor 30 to bias the take-up reel 13 in the direction indicated by an arrow R in fig 3.

In practice, the calculating circuit 36 may be formed of a microcomputer for calculating the radius of the tape 8 wrapped on the take-up reel 13. The following version is possible. Since the length ℓ of the withdrawn tape 8 is constant and is already known, data indicating the radius corresponding to the count value latched in the latch circuit 34 is stored in a ROM and the output from the latch circuit 34 is supplied to this ROM as an address. In this case, data indicating the radius of the tape 8 wrapped on the take-up reel 13 rectilinearly corresponding to the count value is not stored in the ROM but data indicative of one approximate radius for every predetermined range of the count value is stored in the ROM.

According to this embodiment, the torque applied to the take-up reel 13 is changed in response to the radius of the tape 8 wrapped on the take-up reel 13. However, even if the constant torque is applied to the take-up reel 13 as in the prior art, the amount in which the tape 8 is damaged can be considerably reduced as compared with the prior art.

During the loading operation, the loading ring 2 can rotate at optimum rotating speed obtained via various experiments and simulations. It is needless to say that the thus obtained optimum rotating speed data may be stored in the ROM 26.

According to the present invention, as set forth above, since the rotating speed of the loading ring is changed in accordance with the loading position, the speed at which the tape is withdrawn from the tape cassette can be prevented from changing sharply. Therefore, under the condition that the constant torque is applied to the take-up reel, even if the tape cassette is large-sized and the inertia of the take-up reel becomes large, the tape can be prevented from being placed in its slackened or tense state. Thus, the tape can be protected from being damaged.

## Claims

1. In a magnetic tape cassette recording and/or reproducing device including a cylindrical tape guide drum (9) having at least one rotary head associated therewith for recording and/or reproducing signals on a magnetic tape (8) wrapped around the drum (9), a cassette holder spaced from said drum for operatively positioning a tape cassette (1) containing supply (12) and take-up (13) reels on which said magnetic tape (8) is wound, and a tape loading apparatus (2-9) operative in a loading operation to withdraw said magnetic tape (8) from the operatively positioned tape cassette (1) and to wrap the withdrawn tape (8) about said drum:
    the combination of
        a) a supply reel motor and a take-up reel motor (30) for applying torques resisting rotations of said supply reel (12) and take-up reel (13), respectively, of the operatively positioned tape cassette (1) in directions for unwinding the tape therefrom;
        b) loading ring means (2) having guide means (3-5) positioned thereon for withdrawing the tape (8) when said loading ring means (2) is rotated in a loading operation; and

c) loading ring driving means (6, 7, 7a) for rotatably driving said loading ring means (2); characterised by

d) rotation detecting means (21, 22, 25) for detecting the rotation of said loading ring means (2) and generating a detected signal indicating the rotating position of said loading ring means (2); and

e) control means (23, 24, 28) for controlling said loading ring driving means (2) according to said detected signal such that the speed at which the tape is withdrawn from the tape cassette can be prevented from changing sharply.

2. A device according to claim 1, wherein said loading ring driving means includes a motor (6) and gear means (7, 7a) for transmitting the rotation of said motor (6) to said loading ring means (2).

3. A device according to claim 2, wherein said rotation detecting means includes a frequency generator (21) for generating an output signal as said loading ring means (2) is rotated.

4. A device according to claim 3, wherein said control means includes a comparator (24) for comparing the output of said frequency generator (21) and a reference value (REF) generated by a reference signal generator (26, 27) and generating a control signal supplied to said motor (6).

5. A device according to claim 4, wherein said reference signal generator includes counter means (25) for counting the output signal of said frequency generator (21), read-only-memory means (26) for storing a plurality of reference values at a plurality of addresses and the output of said counter means (25) is arranged to be supplied to said read-only-memory means (26) as an address signal, and a D/A (digital to analog) converter (27) for converting the output signal of said read-only memory means (26) to an analog signal.

6. A device according to any one of the preceding claims, further comprising take-up reel motor control means (31-37) for controlling the torque applied to said take-up reel.

7. A device according to claim 6, wherein said take-up reel motor control means includes detecting (31-36) means for detecting the radius of the tape wound on one of said supply and take-up reels of the operatively positioned tape cassette and torque control means (37) for determining the torque applied to said take-up reel.

8. A device according to claim 7, wherein said detecting means includes a second frequency generator (31) for detecting the rotation of said take-up reel, second counter means (33) for counting the output of said second frequency generator, latch means (34) controlled by a latch signal generated by the output signal of said rotation detecting means and latching the output of said second counter means (33), and calculating means (36) for calculating the radius of the tape cased on the output of said latch means (34).

**Patentansprüche**

1. Aufnahme- und/oder Wiedergabevorrichtung für eine Magnetbandkassette mit einer zylindrischen Bandführungstrommel (9), die mindestens einen mit ihr verbundenen rotierenden Kopf zur Aufnahme und/oder Wiedergabe von Signalen auf einem um die Trommel (9) geschlungenen Magnetband (8) aufweist, mit einem von der genannten Trommel beabstandeten Kassettenhalter zum betriebsbereiten Positionieren einer Bandkassette (1), die Abwickel- (12) und Aufwickelspulen (13) enthält, auf denen das genannte Magnetband (8) aufgewickelt ist, und mit einem während eines Ladevorgangs wirksamen Bandladegerät (2-9), um das genannte Magnetband (8) aus der betriebsbereit positionierten Bandkassette (1) herauszuziehen und das herausgezogene Band (8) um die genannte Trommel zu schlingen, als Kombination von

a) einem Motor für die Abwickelspule und einem Motor (30) für die Aufwickelspule zum Anlegen von Drehmomenten, welche jeweils einen Widerstand gegen die Drehbewegungen der genannten Abwickelspule (12) und Aufwickelspule (13) der betriebsbereit positionierten Bandkassette (1) in die Richtungen des Abwickelns des Bandes davon aufbringen;

b) einem Ladering (2) mit darauf angebrachten Führungsmitteln (3-5) zum Herausziehen des Bandes (8), wenn der genannte Ladering (2) während eines Ladevorgangs rotiert; und

c) Ladering-Antriebsmittel (6, 7, 7a), um den genannten Ladering (2) in Drehbewegungen zu versetzen; gekennzeichnet durch

d) Drehbewegungs-Detektionsmittel (21, 22, 25) zum Feststellen der Drehbewegung des genannten Laderings (2) und zum Erzeugen eines Detektionssignals zum Anzeigen der Umdrehungsposition des genannten Laderings (2); und

e) Steuermittel (23, 24, 28) zum Steuern der genannten Ladering-Antriebsmittel (6, 7, 7a) entsprechend dem Detektionssignal derart, daß eine abrupte Änderung der Geschwindigkeit, mit der das Band aus der Bandkassette herausgezogen wird, verhindert werden kann.

2. Vorrichtung nach Anspruch 1, bei der die genannten Ladering-Antriebsmittel einen Motor (6) und ein Getriebe (7, 7a) zum übertragen der Drehbewegung des genannten Motors (6) auf den genannten Ladering (2) aufweisen.

3. Vorrichtung nach Anspruch 2, bei der die genannten Drehbewegungs-Detektionsmittel einen Frequenzgenerator (21) zum Erzeugen eines Ausgangssignals, wie der genannte Ladering (2) rotiert, aufweisen.

4. Vorrichtung nach Anspruch 3, bei der die genannten Steuermittel einen Komparator (24) zum Vergleich des Ausgangssignals des genannten Frequenzgenerators (21) mit einem durch einen Referenzsignalgenerator (26, 27) erzeugten Referenzwert (REF) und zum Erzeugen eines an den genannten Motor (6) anzulegenden Steuersignals aufweisen.

5. Vorrichtung nach Anspruch 4, bei der der genannte Referenzsignalgenerator einen Zähler (25) zum Zählen des Ausgangssignals des genannten Frequenzgenerators (21), einen Nur-Lese-Speicher (26) zum Speichern einer Vielzahl von Referenzwerten unter einer Vielzahl von Adressen, und wobei das Ausgangssignal des genannten Zählers (25) so festgelegt ist, um als Adressensignal dem Nur-Lese-Speicher (26) zugeführt zu werden, sowie einen D/A (Analog/Digital)-Wandler (27) zum Umwandeln des Ausgangssignal des genannten Nur-Lese-Speichers (26) in ein analoges Signal, aufweist.

6. Vorrichtung nach einem der vorhergehenden Ansprüche, die weiterhin Steuermittel (31-37) für den Motor der Aufwickelspule zum Steuern des an die genannte Aufwickelspule anzulegenden Drehmoments aufweist.

7. Vorrichtung nach Anspruch 6, bei der die genannten Steuermittel für den Motor der Aufwickelspule Detektionsmittel (31-36) zum Feststellen des Radius des Bandwickels auf einer der genannten Abwickel- und Aufwickelspulen der betriebsbereit positionierten Bandkassette und Drehmoment-Steuermittel (37) zum Festlegen des an die genannte Aufwickelspule zu legenden Drehmoments aufweisen.

8. Vorrichtung nach Anspruch 7, bei der die genannten Detektionsmittel einen zweiten Frequenzgenerator (31) zum Feststellen der Drehbewegung der genannten Aufwickelspule, einen zweiten Zähler (33) zum Zählen des Ausgangssignals des genannten zweiten Frequenzgenerators, einen Signalspeicher (34) ("latch"), der durch ein vom Ausgangssignal der genannten Detektionsmittel erzeugtes Latchsignal gesteuert wird und den Ausgang des genannten zweiten Zählers (33) beschaltet, und Rechenmittel (36) zum Berechnen des Bandradius auf Grund des Ausgangssignals des Signalspeichers (34) aufweisen.

**Revendications**

1. Dispositif d'enregistrement et/ou de reproduction de cassette à bande magnétique incluant :

un tambour de guidage de bande cylindrique (9) qui comporte au moins une tête tournante qui lui est associée pour enregistrer et/ou reproduire des signaux sur une bande magnétique (8) enroulée autour du tambour (9), un support de cassette espacé dudit tambour pour positionner de manière opérationnelle une cassette à bande (1) qui contient des bobines débitrice (12) et réceptrice (13) sur lesquelles ladite bande magnétique (8) est enroulée et un appareil de chargement de bande (2-9) qui fonctionne lors d'une opération de chargement pour extraire ladite bande magnétique (8) de la cassette à bande (1) positionnée de manière opérationnelle et pour enrouler la bande extraite autour dudit tambour ; la combinaison constituée par :

a) un moteur de bobine débitrice et un moteur de bobine réceptrice (30) pour appliquer des couples résistant respectivement aux rotations de ladite bobine débitrice (12) et de ladite bobine réceptrice (13) de la cassette à bande (1) positionnée de manière opérationnelle suivant des directions de déroulement de la bande ;

b) un moyen de bague de chargement (2) qui comporte un moyen de guidage (3-5) positionné dessus pour extraire la bande (8) lorsque ledit moyen de bague de chargement (2) est tourné lors d'une opération de chargement ; et

c) un moyen d'entraînement de bague de chargement (6, 7, 7a) pour entraîner en rotation ledit moyen de bague de chargement (2) ;

caractérisé par :

d) un moyen de détection de rotation (21, 22, 25) pour détecter la rotation dudit moyen de bague de chargement (2) et pour générer un signal détecté qui indique la position de rotation dudit moyen de bague de chargement (2) ; et

e) un moyen de commande (23, 24, 28) pour commander ledit moyen d'entraînement de bague de chargement (2) conformément audit signal détecté de telle sorte que la vitesse à laquelle la bande est extraite de la cassette à bande puisse être empêchée de varier brutalement.

2. Dispositif selon la revendication 1, dans lequel ledit moyen d'entraînement de bague de chargement inclut un moteur (6) et un moyen d'engrenage (7, 7a) pour transmettre la rotation dudit moteur (6) audit moyen de bague de chargement (2).

3. Dispositif selon la revendication 2, dans lequel ledit moyen de détection de rotation inclut un générateur de fréquence (21) pour générer un signal de sortie lorsque ledit moyen de bague de chargement (2) est mis en rotation.

4. Dispositif selon la revendication 3, dans lequel ledit moyen de commande inclut un comparateur (24) pour comparer la sortie dudit générateur de fréquence (21) à une valeur de référence (REF) générée par un générateur de signal de référence (26, 27) et pour générer un signal de commande appliqué audit moteur (6).

5. Dispositif selon la revendication 4, dans lequel ledit générateur de signal de référence inclut un moyen de compteur (25) pour compter le signal de sortie dudit générateur de fréquence (21), un moyen de mémoire morte (26) pour stocker une pluralité de valeurs de référence en une pluralité d'adresses, la sortie dudit moyen de compteur (25) étant agencée de façon à être appliquée audit moyen de mémoire morte (26) en tant que signal d'adresse, et un convertisseur numérique/analogique (N/A) (27) pour convertir le signal de sortie dudit moyen de mémoire morte (26) en un signal analogique.

6. Dispositif selon l'une quelconque des revendications précédentes, comprenant en outre un moyen de commande de moteur de bobine réceptrice (31-37) pour commander le couple appliqué à ladite bobine réceptrice.

7. Dispositif selon la revendication 6, dans lequel ledit moyen de commande de moteur de bobine réceptrice inclut un moyen de détection (31-36) pour détecter le rayon de la bande enroulée sur l'une desdites bobines débitrice et réceptrice de la cassette à bande positionnée de manière opérationnelle et un moyen de commande de couple (37) pour déterminer le couple appliqué à ladite bobine réceptrice.

8. Dispositif selon la revendication 7, dans lequel ledit moyen de détection inclut un second générateur de fréquence (31) pour détecter la rotation de ladite bobine réceptrice, un second moyen de compteur (33) pour compter la sortie dudit second générateur de fréquence, un moyen de verrouillage (34) commandé par un signal de verrouillage qui est généré par le signal de sortie dudit moyen de détection de rotation et qui verrouille la sortie dudit second moyen de compteur (33) et un moyen de calcul (36) pour calculer le rayon de la bande sur la base de la sortie dudit moyen de verrouillage (34).

FIG. 1A

FIG. 1B

EP 0 282 340 B1

# F I G. 2A

# F I G. 2B

FIG. 3

EP 0 282 340 B1

# F I G. 4A

# F I G. 4B